# EUROPÄISCHE PATENTSCHRIFT

(11) **EP 1 117 549 B1**
(45) Veröffentlichungstag und Bekanntmachung des Hinweises auf die Patenterteilung: **16.10.2002**
(21) Anmeldenummer: 99944567.9
(22) Anmeldetag: 01.09.1999
(51) Int. Cl.: B60H 1/00, B60N 2/44

(54) **VERFAHREN UND HEIZEINRICHTUNG ZUM BEHEIZEN VON EINRICHTUNGEN IN EINEM KRAFTFAHRZEUG**
METHOD AND HEATING DEVICE FOR HEATING DEVICES IN A MOTOR VEHICLE
PROCEDE ET DISPOSITIF DE CHAUFFAGE POUR CHAUFFER DES UNITES DANS UN VEHICULE AUTOMOBILE

(30) Priorität: 28.09.1998 DE 19844514
(43) Veröffentlichungstag der Anmeldung: 25.07.2001
(73) Patentinhaber: Volkswagen Aktiengesellschaft, 38436 Wolfsburg (DE)
(72) Erfinder: DIERKER, Uwe, D-38550 Isenbüttel (DE); MICHELS, Karsten, D-38126 Braunschweig (DE)
(86) Internationale Anmeldenummer: EP9906400
(87) Internationale Veröffentlichungsnummer: WO00018598

(56) Entgegenhaltungen:
- EP-A- 0 543 289
- DE-A- 4 141 062
- US-A- 5 850 741
- PATENT ABSTRACTS OF JAPAN vol. 010, no. 301 (M-525), 14. Oktober 1986 (1986-10-14) & JP 61 113511 A (MATSUSHITA ELECTRIC IND CO LTD), 31. Mai 1986 (1986-05-31)
- PATENT ABSTRACTS OF JAPAN vol. 008, no. 234 (M-334), 26. Oktober 1984 (1984-10-26) & JP 59 114107 A (MATSUSHITA DENKI SANGYO KK), 2. Juli 1984 (1984-07-02)

## Beschreibung

Die Erfindung betrifft ein Verfahren zum Beheizen der Sitze und/oder des Lenkrads in einem Kraftfahrzeug gemäß Oberbegriff des Anspruchs 1 sowie eine Heizeinrichtung zur Durchführung des Verfahrens.

Zum Beheizen der Sitzflächen und der Rückenlehne von Sitzen eines Kraftfahrzeugs sind elektrische Heizeinrichtungen bekannt, die in Abhängigkeit von der Innenraumtemperatur des Kraftfahrzeugs mit angepaßter Heizleistung betrieben werden können.

Aus der DE 41 41 062 A1 ist ein Verfahren und eine Vorrichtung gemäß dem Oberbegriff der Ansprüche 1 und 5, zur Ansteuerung einer Sitzheizung für ein Kraftfahrzeug bekannt, bei dem ein Mikroprozessor in Abhängigkeit von der im Fahrzeuginnenraum durch einen temperaturabhängigen Widerstand ermittelten Temperatur und in Abhängigkeit der eingestellten Heizungsstufe die Sitzheizung über ein Stellglied ansteuert. Dabei kann die Sitztemperatur in der Anheizphase zunächst mit voller Heizleistung erhöht werden. In der Dauerheizphase kann die Sitzheizung dann mit reduzierter Heizleistung betrieben werden.

Eine Steuerung der Heizleistung in Abhängigkeit von der im Fahrzeuginnenraum herrschenden Temperatur hat oftmals eine zu starke Erwärmung der Sitzoberflächen zur Folge, wodurch ein das erforderliche Maß übersteigender Energieverbrauch auftritt.

Aus der DE 197 03 516 C1 ist ein Fahrzeugsitz bekannt, dessen Sitzheizung in Abhängigkeit von der Sitzpolsteroberflächentemperatur gesteuert wird. Zu diesem Zweck ist ein im Sitzpolster angeordneter Temperaturfühler mit der Sitzheizung gekoppelt. Wird ein solcher Temperaturfühler nur an einer Stelle des Sitzpolsters angeordnet, so läßt sich damit nur eine punktuelle Sitzpolsteroberflächentemperatur ermitteln, die stark von der über die gesamte Sitzfläche verteilte durchschnittliche Oberflächentemperatur abweichen kann. Um hier genauere Oberflächentemperaturangaben machen zu können, müßten mehrere Temperaturfühler verteilt an der Polsteroberfläche angeordnet werden, was einen äußerst hohen Montageaufwand darstellen würde.

Zur Verbesserung des Komforts in einem Kraftfahrzeug kann außer einer Sitzheizung auch eine Beheizung des Lenkrades erfolgen. Aus dem deutschen Gebrauchsmuster 94 15 605 ist eine Lenkradheizung für Kraftfahrzeuge bekannt, die elektrische Heizelemente verwendet.

Zum Temperieren eines Lenkrades kann gemäß der JP 82 39 048 A auch der von einer Klimaanlage erzeugte Luftstrom verwendet werden. Dabei besteht dann auch die Möglichkeit, bei einem zu stark erhitzen Lenkrad, das Lenkrad mit einem kühlen Luftstrom aus der Klimaanlage abzukühlen.

Die bekannten Verfahren zum Beheizen der Sitze und/oder des Lenkrads in einem Kraftfahrzeug haben den Nachteil, daß die dabei verwendete temperaturabhängige Steuerung oftmals eine zu starke Heizleistung an die zu erwärmenden Einrichtungen eines Kraftfahrzeugs liefert

Der Erfindung liegt die Aufgabe zugrunde, ein Verfahren zum Beheizen der Sitze und/oder des Lenkrads in einem Kraftfahrzeug anzugeben, bei dem eine den jeweiligen Erfordernissen möglichst gut angepaßte Heizleistung zur Verfügung gestellt wird.

Die Lösung dieser Aufgabe erhält man mit den im Anspruch 1 angegebenen Merkmalen. Durch die Berücksichtigung der Innentemperatur und weiterer Klimawerte, die das im Fahrzeuginnenraum herrschende Innenraumklima charakterisieren, kann die zur Verfügung gestellte Heizleistung sehr genau auf das jeweils erforderliche Maß eingestellt werden, so daß eine unnötige Überhitzung an den Sitzoberflächen und/oder dem Lenkrad vermieden werden kann. Der Vorteil liegt dabei nicht nur in einem verbesserten Komfort und einer Erhöhung der Fahrsicherheit, sondern auch in einer dadurch erzielbaren Energie- bzw. Kraftstoffeinsparung.

Das bevorzugte Verfahren berücksichtigt zum Beheizen der Sitze und/oder des Lenkrads außer der Innentemperatur auch die Luftfeuchtigkeit und die Sonneneinstrahlung. Insbesondere durch die Berücksichtigung der Strahlungswärme, die durch die Sonneneinstrahlung auch auf Sitze und Lenkrad einwirkt, kann eine optimale Einstellung der Heizleistung erreicht werden.

Die Klimawerte, die zur Steuerung der Heizleistung verwendet werden, können dabei zur Ableitung eines Klimakennwerts, der das aktuelle Innenraumklima kennzeichnet, herangezogen werden. Die Steuerung der Heizleistung wird dann anhand des ermittelten Klimakennwerts vorgenommen. Auf diese Weise lassen sich für unterschiedliche Fahrzeugtypen oder auch für unterschiedliche Fahrzeugausstattungen entsprechend optimierte Klimakennwerte zu den ermittelten Klimawerten zuordnen, um eine optimale Anpassung der Heizleistung an die jeweiligen Anforderungen zu erreichen.

Die Klimawerte können auch aus den Meß- und/oder Stellgrößen des Klimasteuergeräts einer Klimaanlage abgeleitet werden, wenn das Klimasteuergerät bereits entsprechende Klimawerte über Sensoren ermittelt. Dadurch reduziert sich dann der Zusatzaufwand für das erfindungsgemäße Verfahren zum Beheizen von Sitzen und/oder des Lenkrads eines Kraftfahrzeugs.

Der Erfindung liegt weiterhin die Aufgabe zugrunde, eine Heizeinrichtung zur Durchführung des erfindungsgemäßen Verfahrens zu schaffen.

Die Lösung dieser Aufgabe erhält man mit den im Anspruch 5 angegebenen Merkmalen. Die Heizeinrichtung verwendet ein Steuergerät, dem als Klimawerte außer der Innentemperatur auch die Innenraumfeuchtigkeit und/oder die Sonneneinstrahlung charakterisierende Meßwerte anliegen, wobei das Steuergerät anhand der anliegenden Meßwerte aus einem Kennfeldspeicher den zugehörigen Stellwert zur Einstellung der Heizleistung für die Sitzund/oder Lenkradheizung ermittelt. Die Sonneneinstrahlung kann außen oder innen mittels entsprechender Temperatursensoren gemessen werden. Es könnte zusätzlich aber auch ein photoelektrischer Sensor die Lichteinstrahlung messen.

Die verwendeten Sensoren und die sich daraus für das Innenraumklima ergebenden Klimawerte können zusätzlich auch zur Steuerung einer Klimaanlage verwendet werden. Besitzt eine vorhandene Klimaanlage bereits entsprechende Sensoren, so können auch deren Meßwerte als Klimawerte für das Steuergerät der Sitz- und/oder Lenkradheizung verwendet werden.

Werden in einem Kennfeldspeicher, der mit dem Steuergerät verbunden ist, fahrzeugspezifische Kennlinien oder Kennfelder abgespeichert, aus denen in Abhängigkeit von den jeweils aktuellen Klimawerten die erforderliche Heizleistung für Sitze und Lenkrad abgeleitet werden können, so hat man dadurch die Möglichkeit, daß für jeden Fahrzeugtyp spezifische Kennlinien und Kennfelder zur Optimierung der Heizleistung und insbesondere zur Vermeidung unnötig hoher Heizleistungen abgespeichert werden können.

Nach einer vorteilhaften Ausbildung der Erfindung ist das Steuergerät der Heizeinrichtung im Bordnetzsteuergerät integriert.

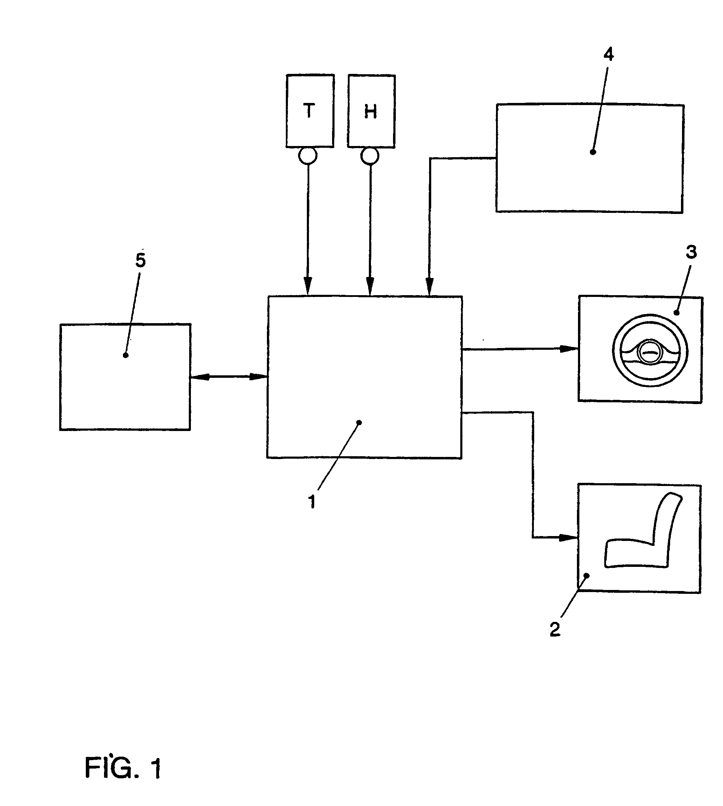

Die Erfindung wird nachfolgend anhand eines in der Zeichnung dargestellten Blockschaltbildes einer Heizeinrichtung zum Beheizen der Sitze und des Lenkrads eines Kraftfahrzeugs näher erläutert.

Die Heizeinrichtung besteht aus einem Steuergerät 1 sowie aus Heizelementen 2 eines Fahrzeugsitzes und Heizelementen 3 eines Lenkrades. Das Steuergerät 1 ist ausgangsseitig mit diesen Heizelementen 2, 3 verbunden. Außerdem ist das Steuergerät 1 mit einem Temperatursensor T, einem Feuchtigkeitssensor H, einem Klimasteuergerät 4 und einem Kennfeldspeicher 5 verbunden.

Der Temperatursensor T liefert an das Steuergerät 1 einen ersten Klimawert in Form der ermittelten Strahlungswärme. Der Feuchtigkeitssensor H gibt als Klimawert die Luftfeuchtigkeit dem Steuergerät 1 an. Über das Klimasteuergerät 4 erhält das Steuergerät 1 beispielsweise als weitere Klimawerte die Innenraumtemperatur und die Außentemperatur.

Im Kennfeldspeicher 5 können zugeordnet zu den ermittelten Klimawerten Stellgrößen oder Sollwerte für die an den Heizelementen 2, 3 einzustellende Heizleistung abgelegt sein. Es besteht aber auch die Möglichkeit, aus den ermittelten Klimawerten durch einen vorgegebenen Algorithmus die jeweils erforderliche Heizleistung für die Heizelemente 2, 3 zu berechnen.

### BEZUGSZEICHENLISTE

- 1: Steuergerät
- 2: Heizelement
- 3: Heizelement
- 4: Klimasteuergerät
- 5: Kennfeldspeicher
- T: Temperatursensor
- H: Feuchtigkeitssensor

## Patentansprüche

1. Verfahren zum Beheizen der Sitze und/oder des Lenkrads in einem Kraftfahrzeug, bei dem die Beheizung des Sitzes und/oder des Lenkrads temperaturabhängig gesteuert wird, **dadurch gekennzeichnet, daß** weitere das im Fahrzeuginnenraum herrschende Innenraumklima charakterisierende Klimawerte zur Steuerung der Sitz- oder Lenkradheizung herangezogen werden.

2. Verfahren nach Anspruch 1, **dadurch gekennzeichnet, daß** als weitere Klimawerte die Luftfeuchtigkeit und/oder die Sonneneinstrahlung berücksichtigt werden.

3. Verfahren nach einem der Ansprüche 1 oder 2, **dadurch gekennzeichnet, daß** aus den Klimawerten ein Klimakennwert abgeleitet wird, der das aktuelle Innenraumklima kennzeichnet, und daß eine dem Klimakennwert zugeordnete Heizleistung für die Sitzheizung und/oder Lenkradheizung eingestellt wird.

4. Verfahren nach einem der vorhergegangenen Ansprüche, **dadurch gekennzeichnet, daß** die Klimawerte wenigstens teilweise aus den Meß- und/oder Stellgrößen des Klimasteuergeräts (4) einer Klimaanlage abgeleitet werden.

5. Heizeinrichtung zur Durchführung des Verfahrens nach einem der vorhergehenden Ansprüche, die ein Steuergerät (1) mit einem kennfeldspeicher zur Steuerung der in einem Sitz und/oder Lenkrad angeordneten Heizelemente (2, 3) hat, wobei an dem Steuergerät (1) ein die Innenraumtemperatur charakterisierender Meßwert anliegt, **dadurch gekennzeichnet, daß** an dem Steuergerät (1) als Klimawerte Meßwerte anliegen, die die Innenraumfeuchtigkeit und/oder die Sonneneinstrahlung charakterisieren, und daß das Steuergerät (1) anhand der anliegenden Meßwerte aus dem Kennfeldspeicher (5) den zugehörigen Stellwert zur Einstellung der Heizlelstung für die Heizelemente (2, 3) in den Sitzen und/oder im Lenkrad des Kraftfahrzeugs ermittelt.

6. Heizeinrichtung nach Anspruch 5, **dadurch gekennzeichnet, daß** an das Steuergerät (1) eingangsseitig Sensoren (T, H) zur Messung der Innenraumtemperatur, der Luftfeuchtigkeit und/oder der Sonneneinstrahlung angeschlossen sind.

7. Heizeinrichtung nach einem der Ansprüche 5 oder 6, **dadurch gekennzeichnet, daß** an dem Steuergerät (1) Meß- und/oder Stellwerte von einem Klimasteuergerät (4) anliegen.

8. Heizeinrichtung nach einem der Ansprüche 5 bis 7, **dadurch gekennzeichnet, daß** in dem Kennfeldspeicher (5) fahrzeugspezifische Kennlinien und/oder Kennfelder abgespeichert sind, die die Zuordnung der Sollwerte für die jeweils einzustellende Heizleistung zu den vorliegenden Klimawerten angeben.

9. Heizeinrichtung nach einem der Ansprüche 5 bis 8, **dadurch gekennzeichnet, daß** das Steuergerät (1) ein Teil eines Bordnetzsteuergerätes ist.

## Claims

1. Method for heating the seats and/or the steering wheel in a motor vehicle, in which the heating of the seat and/or of the steering wheel is controlled as a function of temperature, **characterized in that** further climatic values **characterizing** the interior climate prevailing in the vehicle interior are used for controlling the seat or steering-wheel heating.

2. Method according to Claim 1, **characterized in that** the air humidity and/or the solar radiation are taken into consideration as further climatic values.

3. Method according to one of Claims 1 or 2, **characterized in that** a climatic characteristic value is derived from the climatic values, which characteristic value characterizes the actual interior climate, and **in that** a heating output associated with the climatic characteristic value is set for the seat heating and/or steering-wheel heating.

4. Method according to one of the preceding claims, **characterized in that** at least some of the climatic values are derived from the measured variables and/or actuating variables of the climate control unit (4) of an air conditioning system.

5. Heating device for carrying out the method according to one of the preceding claims, which device has a control unit (1) with a characteristic-diagram store for controlling the heating elements (2, 3) arranged in a seat and/or steering wheel, a measured value **characterizing** the interior temperature being present at the control unit (1), **characterized in that** measured values which characterize the interior humidity and/or the solar radiation are present at the control unit (1) as climatic values, and **in that** the control unit (1) determines from the characteristic-diagram store (5) with reference to the measured values which are present the associated actuating value for setting the heating output for the heating elements (2, 3) in the seat and/or in the steering wheel of the motor vehicle.

6. Heating device according to Claim 5, **characterized in that** sensors (T, H) for measuring the interior temperature, the air humidity and/or the solar radiation are connected to the input side of the control unit (1).

7. Heating device according to one of Claims 5 or 6, **characterized in that** measured values and/or actuating values of a climate control unit (4) are present at the control unit (1).

8. Heating device according to one of Claims 5 to 7, **characterized in that** vehicle-specific characteristic lines and/or characteristic diagrams are stored in the characteristic-diagram store (5) and specify the allocation of the desired values for the heating output to be set in each case to the climatic values which are present.

9. Heating device according to one of Claims 5 to 8, **characterized in that** the control unit (1) is part of a control unit of a vehicle electric system.

## Revendications

1. Procédé de chauffage des sièges et/ou du volant de direction dans un véhicule automobile, dans lequel le chauffage du siège et/ou du volant de direction est commandé en fonction de la température, **caractérisé en ce que** d'autres valeurs climatiques caractérisant le climat intérieur régnant dans l'habitacle du véhicule sont utilisées pour la commande du chauffage des sièges ou du volant de direction.

2. Procédé selon la revendication 1, **caractérisé en ce que** l'on considère, en tant que valeurs climatiques supplémentaires, l'humidité de l'air et/ou le rayonnement solaire.

3. Procédé selon l'une quelconque des revendications 1 ou 2, **caractérisé en ce que** l'on dérive des valeurs climatiques une valeur climatique caractéristique qui **caractérise** le climat intérieur effectif, et **en ce que** l'on ajuste une puissance de chauffage associée à la valeur climatique caractéristique pour le chauffage des sièges et/ou le chauffage du volant de direction.

4. Procédé selon l'une quelconque des revendications précédentes, **caractérisé en ce que** les valeurs climatiques sont dérivées au moins partiellement des grandeurs de mesure et/ou de réglage de l'appareil de commande de la climatisation (4) d'une installation de climatisation.

5. Dispositif de chauffage pour mettre en oeuvre le procédé selon l'une quelconque des revendications précédentes, qui possède un appareil de commande (1) avec une mémoire de champs caractéristiques pour commander les éléments de chauffage (2, 3) disposés dans un siège et/ou dans le volant de direction, une valeur de mesure caractérisant la température intérieure s'appliquant à l'appareil de commande (1), **caractérisé en ce que** des valeurs de mesure s'appliquent à l'appareil de commande (1) en tant que valeurs climatiques qui **caractérisent** l'humidité intérieure et/ou le rayonnement solaire, et **en ce que** l'appareil de commande (1) détermine, à l'aide des valeurs de mesure appliquées, à partir de la mémoire des champs caractéristiques (5), la valeur de réglage associée pour l'ajustement de la puissance de chauffage pour les éléments de chauffage (2, 3) dans les sièges et/ou dans le volant de direction du véhicule automobile.

6. Dispositif de chauffage selon la revendication 5, **caractérisé en ce que** des capteurs (T, H) pour la mesure de la température intérieure, de l'humidité de l'air et/ou du rayonnement solaire sont raccordés du côté de l'entrée à l'appareil de commande (1).

7. Dispositif de chauffage selon l'une quelconque des revendications 5 ou 6, **caractérisé en ce que** des valeurs de mesure et/ou de réglage d'un appareil de commande de climatisation (4) s'appliquent à l'appareil de commande (1).

8. Dispositif de chauffage selon l'une quelconque des revendications 5 à 7, **caractérisé en ce que** des lignes caractéristiques et/ou des champs caractéristiques spécifiques au véhicule sont mémorisés dans la mémoire des champs caractéristiques (5), lesquels indiquent l'affectation des valeurs de consigne pour la puissance de chauffage à ajuster respectivement aux valeurs climatiques existantes.

9. Dispositif de chauffage selon l'une quelconque des revendications 5 à 8, **caractérisé en ce que** l'appareil de commande (1) fait partie d'un appareil de commande d'un réseau de bord.
